(19) Europäisches Patentamt
European Patent Office
Office européen des brevets

(11) EP 3 483 957 B1

(12) EUROPEAN PATENT SPECIFICATION

(45) Date of publication and mention of the grant of the patent:
**06.05.2026 Bulletin 2026/19**

(21) Application number: **18203711.9**

(22) Date of filing: **31.10.2018**

(51) International Patent Classification (IPC):
***H01M 4/133*** *(2010.01)* ***H01M 4/13*** *(2010.01)*
***H01M 4/139*** *(2010.01)* ***H01M 4/62*** *(2006.01)*
***C09D 1/00*** *(2006.01)* *H01M 4/1393 (2010.01)*
*H01M 10/052 (2010.01)* *H01M 4/587 (2010.01)*

(52) Cooperative Patent Classification (CPC):
**H01M 4/13; H01M 4/139; H01M 4/622;**
**H01M 50/46;** H01M 4/133; H01M 4/1393;
H01M 4/587; H01M 10/052; Y02E 60/10

# (54) COMPOSITIONS FOR FORMING A POROUS INSULATING LAYER, ELECTRODE FOR NON-AQUEOUS ELECTROLYTE RECHARGEABLE BATTERY, THE RECHARGEABLE BATTERY AND METHOD FOR MANUFACTURING THE ELECTRODE

ZUSAMMENSETZUNGEN ZUM BILDEN EINER PORÖSEN ISOLIERSCHICHT, ELEKTRODE FÜR WIEDERAUFLADBARE BATTERIE MIT NICHTWÄSSRIGEM ELEKTROLYT, DIE WIEDERAUFLADBARE BATTERIE UND VERFAHREN ZUR HERSTELLUNG DER ELEKTRODE

COMPOSITIONS POUR FORMER UNE COUCHE ISOLANTE POREUSE, ELECTRODE POUR BATTERIE RECHARGEABLE A ELECTROLYTE NON AQUEUX, BATTERIE RECHARGEABLE ET PROCEDE DE FABRICATION DE L'ELECTRODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2017 JP 2017215830**
**21.02.2018 JP 2018029152**
**10.08.2018 KR 20180093968**

(43) Date of publication of application:
**15.05.2019 Bulletin 2019/20**

(73) Proprietor: **Samsung SDI Co., Ltd.**
**Gyeonggi-do 17084 (KR)**

(72) Inventors:
- **Fukatani, Tomoyuki**
**Kanagawa-ken (JP)**
- **Hoshiba, Koji**
**Kanagawa-ken (JP)**

(74) Representative: **Gulde & Partner**
**Patent- und Rechtsanwaltskanzlei mbB**
**Berliner Freiheit 2**
**10785 Berlin (DE)**

(56) References cited:
**CN-A- 106 898 721** **US-A1- 2014 186 682**
**US-A1- 2017 033 344**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## BACKGROUND OF THE INVENTION

### (a) Field of the Invention

The present disclosure relates to an electrode for a non-aqueous electrolyte rechargeable battery, and a method for manufacturing the non-aqueous electrolyte rechargeable battery and the electrode for a non-aqueous electrolyte rechargeable battery.

### (b) Description of the Related Art

A non-aqueous electrolyte rechargeable battery is required to have relatively high energy density and simultaneously, secure safety. In response to this request, a shutdown function of increasing internal resistance of the battery by closing pores of a separator through melting during abnormal overheating due to an internal short circuit of the battery and the like is, for example, being used. In addition, a method of preventing the internal short circuit by directly forming a porous insulating layer on the surface of an electrode aside from the shutdown function by the separator has been suggested (e.g., Japanese Patent Laid-Open Publication No. 2008-226566).

The electrode including this heat-resistance insulating layer may be for example manufactured as follows. First, an active material-containing paste as aqueous slurry is coated on a current collector and then, dried and compressed to form an active material layer. On the active material layer, material slurry for a porous insulating layer is coated and dried to form the porous insulating layer. A further example may be found in US 2014/186682 A1, which discloses an electrode of a lithium-ion battery including a porous insulating layer made by coating a composition on an active material layer. CN 106 898 721 A discloses a composition for forming a porous insulating layer including an inorganic particle (alumina), polyvinylidene difluoride (Kynar) particles (corresponding to polyolefin particle), water and ethanol. Another example may be found in US 2017/033344 A1.

## SUMMARY OF THE INVENTION

The invention is defined by the appended claims. The description that follows is subjected to this limitation. Any disclosure lying outside the scope of said claims is only intended for illustrative as well as comparative purposes.

In general, when the material slurry for a porous insulating layer is coated on the active material layer, a solvent included in the material slurry may expand the active material layer and thus decrease density of the active material layer. In other words, since the active material layer has a pore after the compression, a part of liquid components of the material slurry permeates into the active material layer when the material slurry is coated. The permeated liquid components have an influence on constituting materials of the active material layer. The electrode after the compression has a residual stress, but the permeated liquid components have an influence on properties of the constituting materials of the active material layer such as elasticity and the like and resultantly, destroy a balance of the residual stress and partly cause a residual deformation and thus increase a thickness of the active material layer. When the thickness of the active material layer is increased larger than a design thickness, there may be a problem in inserting a battery device into an external case. When the active material layer consists of a plurality of layers, each layer may show a small thickness increase, but since the battery device is in general a stack structure formed by stacking a plurality of electrode and a separator or a spirally-wound assembly formed by winding a long electrode, a total layer thickness increase of the plurality of active material layers may cause a problem of increasing a total thickness of the battery device.

This problem may be more serious, when the active material layer is compressed with a larger pressure in order to manufacture a high energy density non-aqueous electrolyte rechargeable battery. In other words, when design electrode density (filling rate) of the active material layer is low, the design electrode density of the active material layer may be set to be high in advance of the compression of the electrode by considering a thickness increase of the electrode after forming the porous insulating layer, but since the design electrode density becomes higher according to recently higher energy density of a non-aqueous electrolyte rechargeable battery, the electrode may not be compressed up to higher electrode density than the design electrode density of the active material layer. In addition, when non-oriented graphite particles are for example used as a negative active material battery in a response to a demand on a battery having a long cycle-life, a higher pressure needs to be applied during compression of the electrode. Since the compressed electrode bears a large residual stress and deformation, the thickness increase problem of the active material layer during coating and drying of the material slurry is more and more noticed and thus may be developed up to a production problem of not loading the electrode into an external case of a non-aqueous electrolyte rechargeable battery and the like.

In the present disclosure, (not falling under the protection scope of the present invention) a composition for forming a porous insulating layer capable of suppressing a layer thickness increase of an active material layer of an

electrode is provided. In the present disclosure, a method for manufacturing an electrode for a non-aqueous electrolyte rechargeable battery is provided.

An electrode for a non-aqueous electrolyte rechargeable battery manufactured by the method and a non-aqueous electrolyte rechargeable battery are provided.

According to the present invention, in a composition for forming a porous insulating layer on an active material layer disposed on a main surface of a current collector, the active material layer includes an active material capable of electrochemically intercalating and deintercalating lithium ions and an active material layer binder, the composition for forming the porous insulating layer includes a solvent including an organic solvent and an insulating inorganic particle, and a distance between Hansen solubility parameters of the active material layer binder and the organic solvent represented by Equation 2 is greater than or equal to 8.0 $(MPa)^{1/2}$. A thickness increase of the electrode active material layer may be suppressed due to the porous insulating layer.

A distance between Hansen solubility parameters of the active material and the organic solvent may be greater than or equal to 5.0 $(MPa)^{1/2}$. Within the range, a thickness increase of the electrode active material layer may be further suppressed.

The distance between Hansen solubility parameters of the active material and the organic solvent may be greater than or equal to 8.0$(MPa)^{1/2}$. Within the range, a thickness increase of the electrode active material layer may be further suppressed.

The organic solvent may have a distance ($Ra(MPa)^{1/2}$) of Hansen solubility parameter represented by Equation 1 of greater than or equal to 5.0$(MPa)^{1/2}$.

[Equation 1]

$$Ra = \{4\times(18.0-\delta_{D(solvent)})^2 + (9.3-\delta_{P(solvent)})^2 + (7.7-\delta_{H(solvent)})^2\}^{1/2}$$

In Equation 1, $\delta_{D\,(solvent)}(MPa)^{1/2}$ denotes dispersion force of the organic solvent, $\delta_{P(solvent)}(MPa)^{1/2}$ denotes polarity of the organic solvent, and $\delta_{H(solvent)}(MPa)^{1/2}$ denotes a hydrogen bond force of the organic solvent. Within the range, a thickness increase of the electrode active material layer may be further suppressed.

In addition, the composition for forming the porous insulating layer may further include a binder. In this case, the porous insulating layer may be desirable formed.

In addition, the solvent may include water. In this case, dispersion of the insulating inorganic particle may be improved.

In addition, a boiling point of the organic solvent at 1 atm may be greater than or equal to 160 °C. Within the range, properties changes of the composition for forming the porous insulating layer may be suppressed.

In addition, the organic solvent may include an alcohol-based compound. The alcohol-based compound disperses the insulating inorganic particle and the polyolefin-based polymer particle and dissolves the binder, and thus a thickness of an active material layer of an electrode may be further suppressed from being increased.

In addition, the organic solvent may include a glycol alkyl ether-based compound. The glycol alkyl ether-based compound disperses the insulating inorganic particle and the polyolefin-based polymer particle and dissolves the binder, and thus a thickness of an active material layer of an electrode may be further suppressed from being increased.

The composition for forming the porous insulating layer may further include a polyolefin-based polymer particle. In this case, stability of the non-aqueous electrolyte rechargeable battery may be improved.

According to another embodiment, an electrode for a non-aqueous electrolyte rechargeable battery includes a current collector, an active material layer disposed on a main surface of a current collector, and a porous insulating layer formed by the composition for forming the porous insulating layer on the active material layer, wherein the active material layer includes at least an active material capable of electrochemically intercalating and deintercalating lithium ions and an active material layer binder. In this case, a thickness increase of the active material layer of the manufactured electrode for a non-aqueous electrolyte rechargeable battery may be suppressed.

According to another embodiment, a non-aqueous electrolyte rechargeable battery includes the electrode for a non-aqueous electrolyte rechargeable battery. In this case, a thickness increase of the active material layer of the manufactured non-aqueous electrolyte rechargeable battery may be suppressed.

According to another embodiment, a method for manufacturing an electrode for a non-aqueous electrolyte rechargeable battery includes forming a porous insulating layer on an active material layer disposed on a main surface of a current collector, by using a composition for forming a porous insulating layer,

wherein the active material layer includes at least active material capable of electrochemically intercalating and deintercalating lithium ions and active material layer binder, the composition for forming the porous insulating layer includes at least solvent including an organic solvent and insulating inorganic particle, and a distance between Hansen solubility parameters of the active material layer binder and the organic solvent represented by Equation 2 is greater than

or equal to 8.0 $(MPa)^{1/2}$. In this case, when the non-aqueous electrolyte rechargeable battery is charged and discharged at a high temperature and at a high voltage, cycle-life may be improved.

As described above, according to the present disclosure, the non-aqueous electrolyte rechargeable battery may be suppressed from a thickness increase of an electrode.

## BRIEF DESCRIPTION OF THE DRAWING

FIG. 1 is an explanation view showing a schematic structure of a non-aqueous electrolyte rechargeable battery according to an embodiment.

## DETAILED DESCRIPTION OF THE EMBODIMENTS

Hereinafter, referring to the drawings, one exemplary embodiment is illustrated in detail. On the other hand, constituent elements substantially having the same functional structure in the present specification and drawing are assigned by the same numeral and will not be repetitively illustrated.

<Composition for Forming Porous Insulating Layer >

A composition for forming a porous insulating layer according to an embodiment is described. The composition for forming the porous insulating layer may be used for forming a porous insulating layer on an active material layer of an electrode for a non-aqueous electrolyte rechargeable battery, and includes at least solvent including an organic solvent and insulating inorganic particle, a material for forming a porous insulating layer, for example, a binder.

(Solvent)

As described above, the composition for forming the porous insulating layer according to the present embodiment includes a solvent including an organic solvent. A HSP distance (hereinafter, a "first HSP distance") between Hansen solubility parameters (hereinafter, a "HSP") of the binder (active material layer binder) of the active material layer and HSP of the organic solvent is greater than or equal to 8.0 $(MPa)^{1/2}$.

When the distance (first HSP distance) between HSP of the organic solvent included in the composition for forming the porous insulating layer and HSP of the active material layer binder of the active material layer satisfies the above relationship, swelling of the active material layer is prevented and thus a thickness increase of an active material layer of an electrode may be suppressed even though the composition for forming the porous insulating layer is coated on the active material layer.

The active material layer is in general compressed to adjust density and thus bears a residual stress. The active material layer bears the residual stress but maintains a stable shape, for the residual stress therein is balanced. In general, an organic solvent used in a conventional composition for forming a porous insulating layer has a first HSP distance not satisfying the range and thus expands an active material layer binder. As a result, elasticity of the active material layer binder is much deteriorated, a residual stress in the active material layer is unbalanced, and resultantly, a residual deformation occurs in a way of increasing a thickness of the active material layer. On the other hand, in the present embodiment, the organic solvent has the first HSP distance relationship. Accordingly, when the composition for forming the porous insulating layer is coated on the active material layer, the active material layer binder is suppressed from swelling, and resultantly, the active material layer is suppressed from the residual deformation and thus from the layer thickness increase.

HSP is induced with a regular solution theory and an extended concept of dividing a Hildebrand's solubility parameter (SP) required from evaporation latent heat and density of a material into three components of polarity force ($\delta_P$), a hydrogen bond force ($\delta_H$), and dispersion force ($\delta_D$). This is expressed as one point in a three-dimensional space. Accordingly, the first HSP distance is obtained by comparing HSP's of the active material layer binder and the organic solvent as a distance between two points (HSP distance) in the three-dimensional space shown in Equation 2. On the other hand, in the present specification, HSP, a distance between HSP's, and each component (polarity force $\delta_P$, a hydrogen bond force $\delta_H$, dispersion force $\delta_D$) are marked based on a unit of "$(MPa)^{1/2}$", unless particularly defined.

$$\text{HSP distance} = \{4\times(\delta_{D(binder)} - \delta_{D(solvent)})^2 + (\delta_{P(binder)} - \delta_{P(solvent)})^2 + \delta_{H(binder)} - \delta_{H(solvent)})^2\}^{1/2} \quad \text{[Equation 2]}$$

In Equation 2, $\delta_{D(binder)}$ denotes dispersion force of the active material layer binder, $\delta_{D(solvent)}$ denotes dispersion force of the organic solvent, $\delta_{P(binder)}$ denotes polarity force of the active material layer binder, $\delta_{P(solvent)}$ denotes polarity force of the organic solvent, $\delta_{H(binder)}$ denotes a hydrogen bond force of the active material layer binder, and $\delta_{H(solvent)}$

denotes a hydrogen bond force of the organic solvent.

In addition, an upper limit of the first HSP distance is not particularly limited but may be less than or equal to 30 $(MPa)^{1/2}$ in a general solvent.

When a plurality of organic solvent is mixed, HSP of the mixed solvent is calculated from HSP and a volume mixing ratio of each organic solvent, and a distance between HSP of the mixed solvent and HSP of the active material layer binder (first HSP distance) is set to be greater than or equal to 8.0 $(MPa)^{1/2}$. HSP of the mixed solvent is obtained by applying a weight value of each volume mixing ratio to a point of each solvent disposed in a three-dimensional space of HSP and then, calculating a mass center thereof.

In addition, when a plurality of active material layer binders are included in the active material layer, the organic solvent may satisfy the first HSP distance with the active material layer binders included in an amount of greater than or equal to 45 wt%, greater than or equal to 50 wt%, for example, greater than or equal to 70 wt% and less than or equal to 100 wt% based on a total weight of the active material layer binder. In addition, the organic solvent should satisfy the first HSP distance relationship with all kinds of active material layer binder in the active material layer. Accordingly, the active material layer may be surely prevented from swelling.

In addition, a distance between HSP of the active material of the active material layer and HSP of the organic solvent (hereinafter, a "second HSP distance") may be greater than or equal to 5.0 $(MPa)^{1/2}$, for example, greater than or equal to 8.0 $(MPa)^{1/2}$. An upper limit of the second HSP distance is not particularly limited but may be less than or equal to 20 $(MPa)^{1/2}$ in a general solvent except for water. Accordingly, the active material layer is much suppressed from a layer thickness increase.

The active material in the active material layer is mainly bound by the active material layer binder, but a friction generated in the active material may have an influence on a residual stress balance of the active material layer or maintenance of a layer thickness of the active material layer. When the second HSP distance satisfies the range, an interaction with the surface of the active material, permeation of the active material and the binder on the bonding interface, and permeation of the orgnic solvent into internal pores are suppressed, and as a result, the friction among the active materials is reduced, or the active material and the binder are suppressed from peeling on the interface, and accordingly, the layer thickness increase of the active material layer may be much reduced.

On the other hand, the second HSP distance is calculated in the same way as the first HSP distance is calculated except for substituting HSP of the active material for HSP of the active material layer binder. In addition, when a plurality of organic solvent is mixed in the composition for forming the porous insulating layer, the second HSP distance is calculated in the same way as the first HSP distance is calculated except for substituting HSP of the active material for HSP of the active material layer binder.

In addition, when a plurality of active materials are included in the active material layer, the organic solvent satisfy the second HSP distance with may be used in an amount of greater than or equal to 45 wt%, greater than or equal to 50 wt%, for example, greater than or equal to 70 wt% based on a total weight of the active material and thus satisfy the second HSP distance with and less than or equal to 100 wt% of the active material based on a total weight of the active material. In addition, when the organic solvent satisfies the second HSP distance relationship with all kinds of active material in the active material layer, the active material layer may be more surely prevented from swelling.

HSP of each solvent may be obtained by using, for example, a software database of Hansen Solubility Parameter in Practice 4th Edition and the like.

The HSP of the active material layer binder may be obtained as follows. The active material layer binder (dry solid state) is dipped in a solvent having a known HSP to measure a weight swelling degree regarding each solvent. The usable solvent may be a hydrophilic solvent and a hydrophobic solvent such as dimethyl sulfoxide, acetonitrile, dimethyl formamide, methanol, ethanol, 1-butanol, 1,4-dioxane, tetrahydrofuran, toluene, methyl ethyl ketone, acetone, N-methyl-2-pyrrolidone, n-hexane, cyclohexane, methyl isobutyl ketone, n-butyl acetate, chloroform, methyl acetate, pyridine, hexafluoro isopropanol, diethylene glycol, γ-butyrolactone, 2-amino ethanol, cyclo hexanone, 1,1,2,2-tetrabromo ethane, 1-bromo naphthalene, and aniline, which may be selected in plural. Each solvent is classified into a solvent having the weight swelling degree of greater than or equal to about 3.0 as "swelling solvent" and a solvent having the weight swelling degree of less than 3.0 as "non-swelling solvent". Regarding each solvent used in a test of disposing each solvent in a HSP three-dimensional space, a sphere including points of solvents classified into a "swelling solvent"and not including points of solvents classified into a "non-swelling solvent"is mapped out. When a radius of the sphere is maximized, a central coordinate of the sphere is regarded as HSP of the active material layer binder.

On the other hand, when HSP of the active material layer binder is difficult to experimentally obtain, HSP may be obtained based on a document value. In addition, when the document value of HSP of the active material is difficult to obtain, a document value of a compound corresponding to the active material may be used instead. For example, HSP may be obtained based on a document value of graphene described in Langmuir 2008;24;10560-4. Referring to the article, graphene has dispersion force ($\delta_D$) of 18.0 $(MPa)^{1/2}$, polarity force ($\delta_P$) of 9.3 $(MPa)^{1/2}$, and a hydrogen bond force ($\delta_H$) of 7.7 $(MPa)^{1/2}$. Accordingly, the organic solvent has a HSP distance (Ra) of greater than or equal to 5.0 $(MPa)^{1/2}$, for example, greater than or equal to 8.0 $(MPa)^{1/2}$ according to Equation 1. Therefore, the active material layer is much

suppressed from a layer thickness increase.

[Equation 1]

$$Ra = \{4\times(18.0-\delta_{D(solvent)})^2 + (9.3-\delta_{P(solvent)})^2 + (7.7-\delta_{H(solvent)})^2\}^{1/2}$$

In Equation 1, $\delta_{D(solvent)}$ denotes dispersion force of the organic solvent, $\delta_{P(solvent)}$ denotes polarity force of the organic solvent, and denotes a hydrogen bond force of the organic solvent.

This organic solvent may include any solvent satisfying the HSP relationship and particularly, the first HSP distance relationship without a particular limit, for example, each conventional organic solvent such as a glycol alkyl ether-based compound, an alcohol-based compound, and the like. The organic solvent may easily satisfy the first HSP distance relationship with a general active material layer binder and and may be usefully used in terms of dispersion of insulating inorganic particles or dissolution of a porous insulating layer binder as described later. Particularly, when the alcohol-based compound is used, the first HSP distance and the second HSP distance may be simultaneously increased. On the other hand, the organic solvent may be used as a single solvent alone or a mixture of two or more.

The alcohol-based compound may have for example, C3 to C10, specifically C4 to C8, and may be linear or branched lower alkyl alcohol or aliphatic alcohol that is unsubstituted or substituted with alkoxy group. The alcohol-based compound may be specifically 2-propanol, 1-butanol, 1-pentenol, 1-hexanol, 1-heptanol, 1-octanol, 2-methyl-1-pentenol, 2-ethyl-1-pentenol, 2-methyl-1-hexanol, 2-ethyl-1-hexanol, 2-methyl-1-heptanol, 2-ethyl-1-heptanol, 2-propyl-1-heptanol, 1-methoxy-2-propanol, 3-methoxy-3-methyl-1-butanol, 3-ethoxy-3-methyl-1-butanol, 3-methoxy-3-methyl-1-pentenol, 3-ethoxy-3-methyl-1-pentenol, 1-nonanol, 1-decanol, and the like, and for example, the alcohol-based compound may be 1-butanol, 1-hexanol, 2-ethyl-1-hexanol and 3-methoxy-3-methyl-1-butanol, and desirably 2-ethyl-1-hexanol and 3-methoxy-3-methyl-1-butanol.

When the alcohol-based compound is substituted with the alkoxy group, the carbon number of the alkoxy group is not particularly limited but may be 1 to 4, 1 to 3, for example, 1 or 2.

On the other hand, the alcohol-based compound may be monovalent alcohol or polyhydric alcohol, and desirably monovalent alcohol. Accordingly, a thickness increase of the active material layer may be further suppressed.

The glycol alkyl ether-based compound may be monoalkylene glycol monoalkyl ether such as ethylene glycol monomethyl ether, ethylene glycol monoethyl ether and the like, dialkylene glycol monoalkyl ether such as diethylene glycol monomethyl ether, diethylene glycol monoethyl ether, and the like, trialkylene glycol monoalkyl ether such as triethylene glycol monomethyl ether, triethylene glycol monoethyl ether, and the like, or other alkylene glycol monoalkyl ether having a polymerization degree of 3 or greater, and may desirably be triethylene glycol monomethyl ether, diethylene glycol monomethyl ether, and ethylene glycol monoethyl ether.

The carbon number of the alkoxy group of the glycol alkyl ether-based compound may not be particularly limited, but may be 1 to 4, 1 to 3, for example 1 or 2.

The glycol alkyl ether-based compound may include an ethylene glycol backbone.

A boiling point of the organic solvent may be for example greater than or equal to 100 °C, and specifically greater than or equal to 130 °C and less than or equal to 250 °C. Accordingly, during formation of the porous insulating layer, volatilization of the solvent and viscosity changes caused thereby may be prevented and the porous insulating layer having a uniform thickness may be formed.

The solvent may include water. The water has excellent solubility for the active material layer binder of the active material layer and may be appropriate for dissolution and dispersion of each material of the composition for forming the porous insulating layer. An amount of the water in the solvent may be less than or equal to 70 wt%, for example, less than or equal to 50 wt% based on the solvent.

In the composition for forming the porous insulating layer, an amount of the solvent is not particularly limited, and may be selected according to desirable preparation conditions, but may be greater than or equal to 15 wt% and less than or equal to 60 wt%, for example, greater than or equal to 20 wt% and less than or equal to 45 wt%.

(insulating Inorganic Particle)

The composition for forming the porous insulating layer includes an insulating inorganic particle. The insulating inorganic particle is a solid main component of the composition for forming the porous insulating layer. The insulating inorganic particle ensures insulation properties between the separator and the active material layer and prevents internal short-circuit.

The insulating inorganic particle is not particularly limited, and may be for example, oxide particles such as iron oxide, silica ($SiO_2$), alumina ($Al_2O_3$), $TiO_2$, $BaTiO_2$, ZrO, and the like, nitride particles such as boron nitride, aluminum nitride, silicon nitride, and the like, sparingly soluble ion crystalline particles such as calcium fluoride, barium fluoride,

barium sulfate, and the like, covalent bond-type crystalline particles such as silicon, diamond, and the like, clay particles such as montmorillonite, and the like, materials derived from minerals such as boehmite, zeolite, apatite, kaolin, mullite, spinel, olivine, and the like, or artificial products of the materials. In addition, it may be conductive particles of metal particles, oxide particles such as $SnO_2$, tin-indium oxide (ITO), and the like, carbonaceous particles such as carbon black, graphite and the like, which are surface-treated with materials having electrical insulation properties to be particulates having electrical insulation properties.

An average particle diameter of the insulating inorganic particles is not particularly limited and may be for example greater than or equal to 0.01 μm and less than or equal to 5 μm, and desirably greater than or equal to 0.1 μm and less than or equal to 1 μm. On the other hand, in the present specification, the average particle diameter refers to a volume-based cumulative frequency D50 particle diameter and the average particle diameter may be measured by a laser diffraction. scattering-type particle distribution meter.

An amount of the insulating inorganic particle in the composition for forming the porous insulating layer may be for example greater than or equal to 20 wt% and less than or equal to 98 wt%, and desirably greater than or equal to 30 wt% and less than or equal to 95 wt% based on a solid content of the composition for forming the porous insulating layer.

(Binder)

The composition for forming the porous insulating layer may include a binder (porous insulating layer binder). The porous insulating layer binder is not particularly limited and one or more conventional binders that may be used in the porous insulating layer may be combined.

Such a binder may be for example a polymer or a copolymer of a vinyl group-containing monomer. The vinyl group-containing monomer is not particularly limited, but may be ethylene; acrylic acid, methacrylic acid and (meth) acrylate salt; acrylonitrile; vinyl alcohol; vinyl ester such as vinyl acetate, vinyl pyropionate, vinyl butyrate, and the like; (meth)acrylic acid ester such as isobornyl (meth)acrylate, 2-ethylhexyl (meth)acrylate, methoxyethyl (meth)acrylate, and the like: styrene, and the like.

The porous insulating layer binder may include a polymer Q including at least one monomer unit (A) represented by Chemical Formula 1.

[Chemical Formula 1]

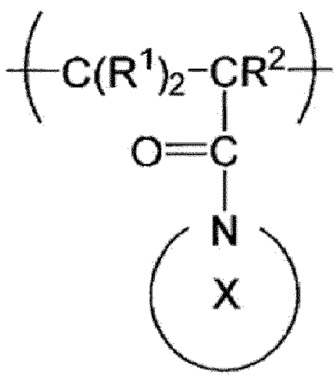

In Chemical Formula 1, $R^1$ and $R^2$ are independently a hydrogen atom or C1 to C3 alkyl group, and the ring X is a heterocyclic group having at least one nitrogen atom as a ring component wherein at least one hydrogen may be replaced by a C1 to C3 alkyl group.

Such a polymer Q including the monomer unit (A) may easily be dissolved in the solvent, particularly the glycol alkyl ether-based compound. In addition, elasticity of the polymer Q is improved due to the monomer unit (A) and thus a rigid porous insulating layer may advantageously be formed.

In $R^1$ and $R^2$, the C1 to C3 alkyl group may be a methyl group, an ethyl group, an n-propyl group, or an isopropyl group. Desirably, $R^1$ and $R^2$ may independently be a hydrogen atom or a methyl group, and more desirably is a hydrogen atom at each occurrence.

The ring constituting the ring X may be for example a heterocyclic group including a nitrogen atom such as a pyrazolyl group, a pyrazolidinyl group, and the like, a heterocyclic group including a nitrogen atom and an oxygen atom such as a morpholinyl group and the like. Among them, the ring constituting the ring X may desirably heterocyclic group including a nitrogen atom and an oxygen atom, and more desirably a morpholinyl group.

The number of the ring component constituting the ring X (e.g., the number of ring-forming carbon atoms in the ring X) is not particularly limited, but may be for example 4 to 10, for example 4 to 7. At least one hydrogen atom of the ring constituting the ring X may be replaced by a C1 to C3 alkyl group, and more specifically, a methyl group, an ethyl group, an n-propyl group, and an isopropyl group.

All of the hydrogen atoms in the ring constituting the ring X may not be replaced.

In addition, an amount of a monomer unit (A) in the polymer Q is not particularly limited but, for example, included in an amount of greater than or equal to 20 wt% and preferably, in a range of greater than or equal to 40 wt% and less than or equal to 98 wt%. Accordingly, the polymer Q is more easily dissolved in the aforementioned solvent and particularly, a glycol ether-based compound.

The polymer Q may also include at least either one of a monomer unit (B) represented by Chemical Formula 2 and a monomer unit (C) represented by Chemical Formula 3. On the other hand, the monomer unit (B) and the monomer unit (C) are included in the polymer Q respectively alone or as a mixture of two or more.

[Chemical Formula 2]

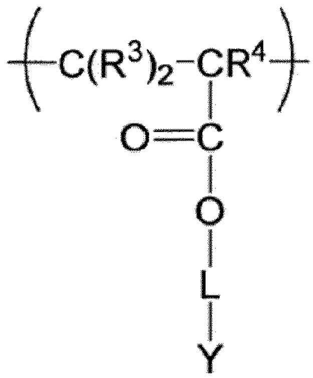

[Chemical Formula 3]

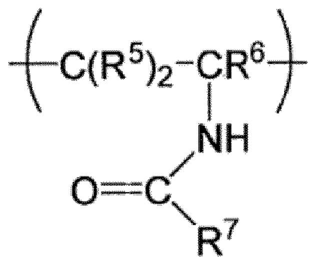

In Chemical Formulae 2 and 3, $R^3$ to $R^7$ are independently a hydrogen atom or a C1 to C3 alkyl group, L is a divalent linking group, Y is a heterocyclic group having an oxygen atom as at least one ring component, wherein at least one hydrogen atom may be replaced by a C1 to C3 alkyl group.

In addition, when the polymer includes at least one of the monomer unit (B) represented by Chemical Formula 2, the polymer Q may easily be dissolved in the glycol ether-based compound.

In $R^3$ and $R^4$ of Chemical Formula 2, the C1 to C3 alkyl group may be a methyl group, an ethyl group, an n-propyl group, or an isopropyl group. Desirably, $R^3$ and $R^4$ may independently be a hydrogen atom or a methyl group, and more desirably is a hydrogen atom at each occurrence.

L may be a divalent linking group, for example, a single bond, a C1 to C5 alkylene group, a polyoxy ethylene group, and the like. The C1 to C5 alkylene group may be a methylene group, an ethylene group, a propylene group, a butylene group, or a propylene group. The hydrogen atom of the C1 to C5 alkylene group may be replaced by a C1 to C3 alkyl group, and more specifically a methyl group, an ethyl group, an n-propyl group, or an isopropyl group.

A ring constituting Y may be for example a unsaturated heterocyclic group including an oxygen atom such as a furanyl group, a pyranyl group, a 2,5-dihydro furanyl group, and the like, a saturated heterocyclic group including an oxygen atom such as a tetrahydrofuranyl group, a tetrahydro pyranyl group, a dioxan-yl group, and the like, a heterocyclic group including a nitrogen atom and an oxygen atom such as a morpholinyl group, and the like. In the compound, the ring constituting the Y may be a saturated heterocyclic group including an oxygen atom, and more desirably a tetrahydrofuranyl group. The number of the ring component constituting Y (e.g., the number of ring-forming atoms in Y) is not particularly limited but may be for example 4 to 10, and desirably 4 to 7.

At least one hydrogen atom of the ring constituting Y may be replaced by a C1 to C3 alkyl group, and more specifically, a methyl group, an ethyl group, an n-propyl group, and an isopropyl group. All of the hydrogen atoms in the ring constituting Y may not be replaced.

In addition, the monomer unit (A) and the monomer unit (B) may be mixed in a weight ratio (A)/(B) of 50/50 to 100/0 in the polymer Q. Accordingly, when the solvent includes a glycol ether-based compound, the polymer Q may be more easily dissolved in the solvent.

Particularly, when the polymer Q includes at least one monomer unit (C), dispersion of insulating inorganic particles or binding properties with the active material layer may be improved. In addition, when the polymer Q includes at least one monomer unit (C), and the composition for forming the porous insulating layer includes polyolefin-based polymer particles, the polyolefin-based polymer particles may easily maintain a stable dispersion state in the composition.

In $R^5$ to $R^7$ of Chemical Formula 3, the C1 to C3 alkyl group may be a methyl group, an ethyl group, an n-propyl group, or anisopropyl group. Desirably, $R^5$ to $R^7$ may independently be a hydrogen atom or a methyl group, and more desirably a hydrogen atom.

In addition, the monomer unit (A) and the monomer unit (C) are used in a mass ratio (A)/(C) of 40/60 to 60/40. Accordingly, binding properties of the binder and dispersion of the polyolefin-based polymer particles may be simultaneously improved.

In addition, the polymer Q may include an ionic monomer unit, but when the composition for forming the porous insulating layer includes no polyolefin-based polymer particles, the ionic monomer unit may be included in an amount of greater than or equal to 0.5 wt% and less than or equal to 50 wt% and preferably, greater than or equal to 2 wt% and less than or equal to 30 wt%. Accordingly, dispersion of the insulating inorganic particles or binding properties with the active material layer may be much improved. In addition, when the composition for forming the porous insulating layer includes the polyolefin-based polymer particles, an amount of the ionic monomer unit may be in a range of greater than or equal to 2 wt% and less than or equal to 5 wt%. Accordingly, dispersion stability of the polyolefin-based polymer particles is sufficiently maintained.

On the other hand, the ionic monomer unit, for example, denotes a monomer unit having a functional group capable of causing a positive charge or a negative charge due to ionization and the like in a solvent including water. The ionic monomer unit is not particularly limited and may be for example a monomer unit (D) represented by Chemical Formula 4.

[Chemical Formula 4]

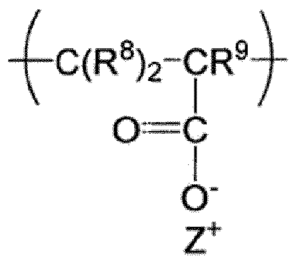

In Chemical Formula 4, $R^8$ and $R^9$ are independently a hydrogen atom or a C1 to C3 alkyl group, $Z^+$ is a monovalent cation group, and $Z^+$ and $O^-$ may form an ion bond. In $R^8$ and $R^9$ of Chemical Formula 4, the C1 to C3 alkyl group may be a methyl group, an ethyl group, an n-propyl group, or an isopropyl group. Desirably, $R^8$ and $R^9$ may independently be a hydrogen atom or a methyl group at each occurrence and may more desirably be a hydrogen atom.

In addition, $Z^+$ may be for example an inorganic cation such as a proton, an ammonium ion, an organic cation, or a metal ion, and a metal complex compound such as a metal complex. The organic cation may be a cation of amines. Such

amines may be any primary, secondary, or tertiary. For example, amines may be aliphatic amines such as methyl amine, dimethyl amine, triethyl amine, monoethanol amine, diethanol amine, triethanol amine, ethylenediamine, N,N-diisopropyl ethyl amine, hexamethylene diamine and the like, aromatic amines such as aniline and the like, non-aromatic heterocyclic amines such as pyrrolidine, piperidine, piperazine, morpholine, pyridine, pyridazine, pyrimidine, pyrazine, oxazole, thiazole, and the like.

On the other hand, the polymer Q may include a monomer unit except for the aforementioned.

In addition, an amount sum of the monomer units (A), (B), and (C) in the polymer Q may be for example greater than or equal to 50 wt%, preferably, greater than or equal to 70 wt%, and more preferably, greater than or equal to 95 wt% based on a total amount of the polymer Q.

Bonding methods of the copolymer and the polymer included in the porous insulating layer binder are not particularly limited, but the polymer may be a random copolymer, an alternative copolymer, a periodic copolymer, a block copolymer, or a graft copolymer. Weight average molecular weights of the copolymer and the polymer included in the porous insulating layer binder are not particularly limited but may be for example, greater than or equal to about 50,000 and less than or equal to about 2,000,000 and desirably, greater than or equal to about 100,000 and less than or equal to about 1,000,000. On the other hand, the weight average molecular weight may be measured through gel permeation chromatography of converting polyethylene oxide (PEO) into a standard material.

An amount of the porous insulating layer binder of the composition for forming the porous insulating layer may be for example greater than or equal to about 2 wt% and less than or equal to about 10 wt%, and desirably greater than or equal to about 3 wt% and less than or equal to about 7 wt% based on a solid content of the composition for forming the porous insulating layer.

(Polyolefin-based Polymer Particle)

In addition, the composition for forming the porous insulating layer may include a polyolefin-based polymer particle. The polyolefin-based polymer particle has a relatively low melting point, and thus it may be molten and may block transport of lithium ions at the time of abnormal heating of a non-aqueous electrolyte rechargeable battery. Accordingly, stability of the non-aqueous electrolyte rechargeable battery may be further improved.

The polyolefin-based polymer particle may be for example a polyethylene-based polymer particle, a polypropylene-based polymer particle, and the like.

An average particle diameter of the polyolefin-based polymer particle is not particularly limited, but may be for example, greater than or equal to 0.5 μm, greater than or equal to 4 μm, or greater than or equal to 0.7 μm and less than or equal to 2 μm. In general, the porous insulating layer may be formed as a relatively thin (for example less than or equal to 4 μm) film. Accordingly, the average particle diameter of the polyolefin-based polymer particle needs to be relatively small. When the polyolefin-based polymer particle has a small particle diameter, it may relatively be difficult to be dispersed but the polymer including monomer units (A) and (B) is used as a binder and thus it may uniformly dispersed in the porous insulating layer.

An amount of the polyolefin-based polymer particle of the composition for forming the porous insulating layer may be for example greater than or equal to 20 wt% and less than or equal to 80 wt% based on a solid content of the composition for forming the porous insulating layer.

The composition for forming the porous insulating layer may be suppressed from swelling of the active material layer, even when coated on the active material layer by using an organic solvent having a HSP distance of greater than or equal to 8.0 from a binder of the active material layer.

<Structure of Non-aqueous Electrolyte Rechargeable Battery>

Hereinafter, referring to FIG. 1, a specific structure of a non-aqueous electrolyte rechargeable battery 10 according to an embodiment of the present disclosure is described. FIG. 1 is an explanation view showing a schematic structure of a non-aqueous electrolyte rechargeable battery according to an embodiment. The non-aqueous electrolyte rechargeable battery 10 includes the negative electrode 30 that is the electrode for a non-aqueous electrolyte rechargeable battery according to an embodiment of the present disclosure.

The non-aqueous electrolyte rechargeable battery 10 of FIG. 1 is an example of a rechargeable battery according to the present embodiment. As shown in FIG. 1, the non-aqueous electrolyte rechargeable battery 10 includes a positive electrode 20, a negative electrode 30, and a separator layer 40. The shape of the non-aqueous electrolyte rechargeable battery 10 is not particularly limited, but it may be for example, cylindrical, prismatic, laminate-type, or button-type, and the like.

The positive electrode 20 includes a current collector 21 and a positive active material layer 22 disposed on a main surface of the current collector 21. The current collector 21 may use any conductor and may be for example, aluminum (Al), stainless steel, or nickel-plated steel.

On the other hand, in the present specification, a "main surface" denotes a surface having a larger area than the other surfaces among all the surfaces of a thin plate. For example, the main surface in the current collector 21 denotes one surface and the other surface of the thin film-shaped current collector 21 but not a cross section, a side, or the like.

The positive active material layer 22 includes at least positive active material and binder (positive active material layer binder) and may further include a conductive agent. On the other hand, each amount of the positive active material, the conductive agent, and the binder are not particularly limited, and may be any amount applied to a conventional non-aqueous electrolyte rechargeable battery.

The positive active material may be for example a transition metal oxide including lithium or a solid solution oxide and may be a material being capable of electrochemically intercalating and deintercalating lithium ions without particular limitation. The transition metal oxide including lithium may be a Li·Co-based composite oxide such as $LiCoO_2$, a Li·Ni·Co·Mn-based composite oxide such as $LiNi_xCo_yMn_zO_2$, a Li·Ni-based composite oxide such as $LiNiO_2$, or a Li·Mn-based composite oxide such as $LiMn_2O_4$.

The solid solution oxide may be for example $Li_aMn_xCo_yNi_zO_2$ ($1.15 \leq a \leq 1.43$, $0.45 \leq x \leq 0.6$, $0.10 \leq y \leq 0.15$, $0.20 \leq z \leq 0.28$), $LiMn_xCo_yNi_zO_2$ ($0.3 \leq x \leq 0.85$, $0.10 \leq y \leq 0.3$, $0.10 \leq z \leq 0.3$), $LiMn_{1.5}Ni_{0.5}O_4$, and the like. On the other hand, an amount (content ratio) of the positive active material is not particularly limited, and may be any amount applied to a positive active material layer of a non-aqueous electrolyte rechargeable battery. **The** compound may be used alone or in plural.

**The** conductive agent may be for example carbon black such as ketjen black or acetylene black, natural graphite, artificial graphite, fiber-shaped carbon such as carbon nanotube, graphene, carbon nanofibers and the like or a composite of the fiber-shaped carbon and carbon black. However, the conductive agent is not particularly limited as long as it increases conductivity of the positive electrode. An amount of the conductive agent is not particularly limited and may be any amount applied to a positive active material layer of a non-aqueous electrolyte rechargeable battery.

**The** binder may be for example a fluorine-containing resin such as polyvinylidene fluoride and the like, a styrene-containing resin such as a styrene butadiene rubber, and the like, an ethylene-propylene-diene terpolymer, an acrylonitrile-butadiene rubber, a fluoroelastomer, polyvinyl acetate, polymethylmethacrylate, polyethylene, polyvinyl alcohol, carboxymethyl cellulose, or a derivative thereof (for example a salt of carboxymethyl cellulose), or nitrocellulose. **The** binder is not particularly limited as long as it binds the positive active material and the conductive agent on the current collector 21 and has oxidation resistance to endure a high potential of a positive electrode and electrolyte solution stability. An amount of the binder is not particularly limited and may be any amount applied to a positive active material layer of a non-aqueous electrolyte rechargeable battery.

**The** positive active material layer 22 may be for example manufactured by dispersing a positive active material, a conductive agent, and a binder in an appropriate organic solvent (for example, N-methyl-2-pyrrolidone) to prepare positive electrode slurry and coating the positive electrode slurry on a current collector 21 followed by drying and compressing the same. A density of the positive active material layer 22 after compression is not particularly limited and may be any density applied to a positive active material layer of a non-aqueous electrolyte rechargeable battery.

The negative electrode 30 is an example of a negative electrode for a rechargeable battery according to the present embodiment.

The negative electrode 30 includes a thin-film current collector 31, a negative active material layer 32 disposed contacting the current collector 31, and a porous insulating layer 33 disposed on the negative active material layer 32.

The current collector 31 is not particularly limited but may be for example made of copper, aluminum, iron, nickel, stainless steel or an alloy thereof or steel plated therewith, for example nickel-plated steel. The current collector 31 is particularly made of copper or nickel or an alloy thereof.

The negative active material layer 32 contacts the current collector 31, and more specifically one main surface thereof is adhered on the current collector 31. The negative active material layer 32 includes at least negative active material. In the present embodiment, the negative active material layer 32 includes a negative active material and a binder (negative active material layer binder).

The negative active material is not particularly limited as long as it is a material capable of electrochemically intercalating and deintercalating lithium ions and may be for example a graphite active material (artificial graphite, natural graphite, a mixture of artificial graphite and natural graphite, natural graphite coated with artificial graphite), a Si-based active material or a Sn-based active material (for example particulates such as silicon (Si) or tin (Sn) or oxides thereof, alloys of silicon or tin as a basic material), metal lithium, and a titanium oxide-based compound such as $Li_4Ti_5O_{12}$. The negative active material may include at least one of the materials. The oxide of silicon is represented by $SiO_x$ ($0 \leq x \leq 2$).

An amount of the negative active material of the negative active material layer 32 is not particularly limited but may be for example 60 wt% to 100 wt%, for example, 80 wt% to 99.5 wt%, or 90 wt% to 99 wt%.

The negative active material layer binder may be the same as the binder of the positive active material layer 22. Among the materials, at least one binder of the styrene-containing resin, the fluorine-containing resin, polyethylene, polyvinyl alcohol, and carboxymethyl celluloses may desirably be used. The styrene-containing resin may desirably be a styrene butadiene rubber and the fluorine-containing resin may desirably be polyvinylidene fluoride. The carboxymethyl

celluloses may be carboxymethyl cellulose, and a carboxymethyl cellulose derivative such as a salt of carboxymethyl cellulose.

The salt of carboxymethyl cellulose may be for example a salt of carboxymethyl cellulose and an alkali metal ion, more specifically sodium carboxymethyl cellulose, potassium carboxymethyl cellulose, lithium carboxymethyl cellulose, and the like.

An amount of the negative active material layer binder of the negative active material layer 32 is not particularly limited and may be for example 0 to 40 wt%, for example, 0.5 to 20 wt%, or 1 to 10 wt%.

The negative active material layer 32 may be for example manufactured by dispersing the negative active material and the negative active material layer binder in an appropriate solvent (e.g., water, etc.) to prepare negative electrode slurry and coating the negative electrode slurry on a current collector 31 followed by drying and compressing the same. A thickness of the negative active material layer 32 after compression is not particularly limited and may be any thickness applied to a negative active material layer of a lithium ion rechargeable battery. The negative active material layer 32 may include a graphite active material optionally.

The negative active material layer 32 may be manufactured by a physical deposition method or a chemical deposition method such as thermal evaporation, ion plating, sputtering and the like, besides the above method.

The porous insulating layer 33 may be formed on the negative active material layer 32 so that it may be disposed between the negative electrode 30 and the separator layer 40. The porous insulating layer 33 prevent any short-circuit of the non-aqueous electrolyte rechargeable battery 10. In the present embodiment, the porous insulating layer 33 is manufactured by coating the composition for forming the porous insulating layer and drying the same. Accordingly, the porous insulating layer includes for example the insulating inorganic particle and the porous insulating layer binder, and arbitrarily the polyolefin-based polymer particle. The insulating inorganic particle, the porous insulating layer binder, and the polyolefin-based polymer particle are the same as described above.

The separator layer 40 generally includes a separator and an electrolyte solution. The separator is not particularly limited, and any separator of a lithium ion rechargeable battery may be used. The separator may be a porous film or a non-woven fabric having excellent high rate discharge performance alone or in a combination thereof. The separator may be coated with an inorganic material such as $Al_2O_3$, $Mg(OH)_2$, $SiO_2$, and the like and the inorganic material may be included as a filler.

Materials constituting the separator may be for example a polyolefin-based resin such as polyethylene, polypropylene and the like, a polyester-based resin such as polyethylene terephthalate, polybutylene terephthalate, and the like, polyvinylidene fluoride, a vinylidene fluoride-hexafluoro propylene copolymer, a vinylidene fluoride-perfluoro vinyl ether copolymer, a vinylidene fluoride-tetrafluoro ethylene copolymer, a vinylidene fluoride-trifluoro ethylene copolymer, a vinylidene fluoride-fluoro ethylene copolymer, a vinylidene fluoride-hexafluoro acetone copolymer, a vinylidene fluoride-ethylene copolymer, a vinylidene fluoride-propylene copolymer, a vinylidene fluoride-trifluoro propylene copolymer, a vinylidene fluoride-tetrafluoro ethylene-hexafluoro propylene copolymer, a vinylidene fluoride-ethylene-tetrafluoro ethylene copolymer, and the like. A porosity of the separator is not particularly limited and a porosity of the separator of a conventional lithium ion rechargeable battery may be applied.

The electrolyte solution includes an electrolytic salt and a solvent.

The electrolytic salt may be any conventional salt used in a lithium ion battery without particular limitation. For example, it may include an inorganic ion salt including at least one of lithium (Li), sodium (Na), or potassium (K) such as $LiClO_4$, $LiBF_4$, $LiAsF_6$, $LiPF_6$, LiSCN, LiBr, LiI, $Li_2SO_4$, $Li_2B_{10}Cl_{10}$, $NaClO_4$, NaI, NaSCN, NaBr, $KClO_4$, KSCN, and the like, an organic ion salt such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n\text{-}C_4H_9)_4NClO_4$, $(n\text{-}C_4H_9)_4NI$, $(C_2H_5)_4N$-maleate, $(C_2H_5)_4N$-benzoate, $(C_2H_5)_4N$-phthalate, lithium stearyl sulfonate, lithium octyl sulfonate, lithium dodecyl benzenesulfonate, and the like, and the electrolytic salt may be used alone or in plural. The electrolytic salt may include a lithium salt.

A concentration of the electrolytic salt is not particularly limited but may be for example 0.5 to 2.0 mol/L.

The solvent is a non-aqueous solvent that dissolves the electrolytic salt. The solvent may be for example cyclic carbonate esters such as propylene carbonate, ethylene carbonate, butylene carbonate, chloro ethylene carbonate, vinylene carbonate, and the like, cyclic esters such as $\gamma$-butyrolactone, $\gamma$-valero lactone, and the like, linear carbonates such as dimethyl carbonate, diethyl carbonate, ethylmethyl carbonate, and the like, linear esters such as methyl formate, methyl acetate, methyl butyrate, and the like, tetrahydrofuran or a derivative thereof, ethers such as 1,3-dioxane, 1,4-dioxane, 1,2-dimethoxy ethane, 1,4-dibutoxyethane or methyl diglyme, and the like, nitriles such as acetonitrile, benzonitrile, and the like, dioxolane or a derivative thereof, ethylene sulfide, sulfolane, sultone, or a derivative thereof, which may be used alone or as a mixture of two or more. When the solvent is used as a mixture of two or more, a mixing ratio of each solvent may be any mixing ratio of a conventional lithium ion rechargeable battery.

On the other hand, the electrolyte solution may include various additives such as a negative electrode SEI (Solid Electrolyte Interface) forming agent, a surfactant, and the like. Such additives may be for example succinic anhydride, lithium bis(oxalate)borate, lithium tetrafluoroborate, a dinitrile compound, propane sultone, butane sultone, propene

sultone, 3-sulfolene, fluorinated arylether, fluorinated acrylate, and the like. Concentrations of such additives may be any concentration of additives in a general lithium ion rechargeable battery.

In the present embodiment, the non-aqueous electrolyte rechargeable battery 10 may use the composition for forming the porous insulating layer according to the present embodiment during manufacture of the porous insulating layer 33 of the negative electrode 30. Accordingly, any layer thickness of the negative active material layer 32 may be suppressed.

On the other hand, the negative electrode 30 includes the porous insulating layer 33 in the above description, but the present disclosure is not limited thereto. For example, the positive electrode 20 may include the porous insulating layer. In this case, a layer thickness increase of the positive active material layer 22 of the positive electrode 20 may be suppressed. In addition, in this case, the negative electrode 30 may not include the porous insulating layer.

<Method of Manufacturing Non-aqueous Electrolyte Rechargeable Battery>

Next, a method of manufacturing a non-aqueous electrolyte rechargeable battery 10 is described. A method of manufacturing a non-aqueous electrolyte rechargeable battery 10 according to the present embodiment includes forming a porous insulating layer using the composition for forming the porous insulating layer on an active material layer disposed on a main surface of a current collector. However, the method of manufacturing a non-aqueous electrolyte rechargeable battery 10 is not limited to the following method but may include any manufacturing method.

The positive electrode 20 is manufactured as follows. First, a positive active material, a conductive agent, and a positive active material layer binder are mixed in a desirable ratio and then dispersed in an organic solvent (for example, N-methyl-2-pyrrolidone) to prepare positive electrode slurry. Next, the positive electrode slurry is formed (for example, coated) on the current collector 21 and dried to manufacture a positive active material layer 22. Herein, the coating has no particular limit but may be performed by using, for example, a knife coater, a gravure coater, and the like. Hereinafter, each coating may be performed in the same method. In addition, the positive active material layer 22 is compressed with a press to a desirable thickness. Accordingly, the positive electrode 20 is manufactured. Herein, a thickness of the positive active material layer 22 is not particularly limited and may be any thickness of a positive active material layer of a conventional non-aqueous electrolyte rechargeable battery.

The negative electrode 30 is manufactured in the same method as the method of manufacturing the positive electrode 20. First, the negative active material and the negative active material layer binder are mixed in a desirable ratio to disperse them in a solvent (for example, water) and to prepare negative electrode slurry. On the other hand, the negative electrode slurry may optionally include a graphite active material. Subsequently, the negative electrode slurry is formed (for example, coated) on the current collector 31, and then dried to manufacture a negative active material layer 32. In addition, the negative active material layer 32 is compressed with a press to a desirable thickness. Herein, a thickness of the negative active material layer 32 is not particularly limited and may be any thickness of a negative active material layer of a conventional non-aqueous electrolyte rechargeable battery. Then, a porous insulating layer 33 is formed using the composition for forming the porous insulating layer. Specifically, the composition for forming the porous insulating layer is coated on the negative active material layer 32 and dried to form the porous insulating layer 33. Accordingly, the negative electrode 30 is manufactured. On the other hand, the porous insulating layer 33 is formed using the composition for forming the porous insulating layer according to the present embodiment and thereby swelling of the negative active material layer 32 may be suppressed during coating the composition for forming the porous insulating layer. As a result, a thickness increase of the negative electrode 30 is prevented.

Subsequently, the separator 40 is disposed between the positive electrode 20 and the negative electrode 30 to manufacture an electrode structure. Then, the electrode structure is shaped to have a desired shape (for example, a cylinder, a prism, a laminate type, a button type, and the like) and then inserted into a container having the shape. In addition, the electrolyte solution is injected into the container and impregnated into each pore in the separator 40. Accordingly, the non-aqueous electrolyte rechargeable battery 10 is manufactured.

On the other hand, in the present embodiment, the porous insulating layer 33 is formed on the negative active material layer 32, but the present disclosure is not limited thereto. For example, a porous insulating layer may be formed on the positive active material layer 22 using the composition for forming the porous insulating layer. In this case, it is not necessary that a porous insulating layer is formed on the negative active material layer 32.

**Examples**

Hereinafter, the present disclosure is described with reference to specific examples in more detail.

However, the following examples are examples of the present disclosure and the present disclosure is not limited to the following examples.

(Synthesis of Binder for Porous Insulating Layer)

< Synthesis of Binder 1 >

70.6 mg of azoisobutyro nitrile, 10.0 g of N-vinyl formamide, 9.5 g of acryloyl morpholine, and 0.5 g of acrylic acid were put in a 500 ml flask equipped with an agitator and a thermometer and then, stirred, and 180.0 g of triethylene glycol monomethyl ether and 0.424 g of ethanol amine were sequentially mixed therewith. After substituting nitrogen inside the system, the obtained mixture was heated up to 65 °C and reacted for 12 hours while stirred at 600 rpm. After the reaction, non-volatile components in the solution were measured to be 9.7 wt% (conversion rate: 96 %). Subsequently, an initiator residue and a nonreaction monomer were removed from the solution after the reaction through heating and distillation under a reduced pressure. The solution was cooled down to room temperature, and ethanol amine was added thereto to adjust into pH 8 and thus prepare a copolymer solution. A solid content therein was 10 %.

< Synthesis of Binder 2 >

A 10 % copolymer solution was synthesized according to the same method as the synthesis of Binder 1 except for changing the solvent of Binder 1 from triethylene glycol monomethyl ether to diethylene glycol monomethyl ether.

< Synthesis of Binder 3 >

A reaction composition in the synthesis of Binder 1 was changed as follows. In other word, a 10 % copolymer solution was synthesized according to the same method as the synthesis of Binder 1 except for putting 8.0 g of N-vinyl formamide, 11.0 g of acryloyl morpholine, and 1.0 g of acrylic acid in a flask and stirring them and then, sequentially adding 180.0 g of triethylene glycol monomethyl ether and 0.848 g of ethanol amine thereto.

< Synthesis of Binder 4 >

A reaction composition in the synthesis of Binder 1 was changed as follows. In other word, a copolymer aqueous solution was synthesized according to the same method as the synthesis of Binder 1 except for putting 10.0 g of N-vinyl formamide, 4.9 g of acryloyl morpholine, 0.5 g of acrylic acid, and 4.6 g of tetrahydrofuranyl acrylate in a flask and stirring them and then, sequentially adding 180.0 g of diethylene glycol monomethyl ether and 0.424 g of ethanol amine thereto.

< Synthesis of Binder 5 >

A reaction composition in the synthesis of Binder 1 was changed as follows. In other word, a copolymer aqueous solution was synthesized according to the same method as the synthesis of Binder 1 except for putting 14.0 g of acryloyl morpholine and 6.0 g of acrylic acid in a flask and stirring them and then, sequentially adding 180.0 g of diethylene glycol monomethyl ether and 5.088 g of ethanol amine thereto.

< Synthesis of Binder 6 >

A reaction composition in the synthesis of Binder 1 was changed as follows. In other words, a copolymer aqueous solution was obtained according to the same method as the synthesis of Binder 1 except for putting 19.0 g of acryloyl morpholine and 1.0 g of acrylic acid in a flask and stirring them and then, sequentially adding 180.0 g of diethylene glycol monomethyl ether and 0.848 g of ethanol amine thereto.

< Synthesis of Binder 8 >

12.0 g of 2-ethyl hexyl acrylate, 22.0 g of isobornyl acrylate, 4.0 g of acrylo nitrile, 2.0 g of methacrylic acid, 0.8 g of sodium dodecyl benzene sulfonate, and 115 g of ion exchange water were put in a 500 ml flask equipped with an agitator and a thermometer and then, stirred, nitrogen was substituted in the flask, and the mixture was heated up to 70 °C, while stirred at 600 rpm. When the temperature reaches 70 °C, a solution prepared by dissolving 0.27 g of potassium persulfate in 5.0 g of ion exchange water was added thereto, and the mixture was reacted for 12 hours. After the reaction, when non-volatile components (solid content) of the obtained aqueous dispersion were measured, the result was 25.0 wt% (conversion rate: 100 %). Subsequently, the reaction solution was concentrated up to 40 wt% of the non-volatile components through heating and distillation under a reduced pressure, and 200 ml of ethanol was added thereto to precipitate and separate a solid. The solid was recovered, twice washed with 100 ml of ethanol, and dried under a reduced pressure at 80 °C for 10 hours, 460 g of 2-ethyl hexanol was added thereto, and the mixture was stirred at room temperature to obtain a copolymer solution. A solid content therein was 8 %.

<Synthesis of Binder 9>

A copolymer solution was obtained according to the same method as the synthesis of Binder 5 except for using 3-methoxy-3-methyl-1-butanol instead of diethylene glycol monomethyl ether.

(Manufacture of Electrode)

Negative electrode slurry was prepared by mixing artificial graphite (scale-type assembly, specific surface area: 1.7 $m^2$/g, and average particle diameter: 15 μm), sodium carboxymethyl cellulose salt, and a styrene butadiene-based aqueous dispersion solid in a mass ratio of 97.5:1.0:1.5 and then, dissolving and dispersing the mixture in a water solvent. Subsequently, the negative electrode slurry was coated to be 10 μm thick on both surfaces of a copper foil current collector, dried, and compressed with a roll press to manufacture a negative electrode having a negative active material layer on the copper foil current collector. A coating amount of the negative electrode was 26 mg/$cm^2$ (on both surfaces) and an electrode density was 1.65 g/$cm^3$. Herein, the negative active material layer used styrene butadiene rubber and carboxymethyl cellulose as a binder.

(Preparation of Composition for Forming Porous Insulating Layer)

**(Example 1)**

Ion exchange water in the same amount as that of triethylene glycol monomethyl ether included in Binder 1 was added to Binder 1 to prepare a mixed solvent solution including the triethylene glycol monomethyl ether and the ion exchange water in a mass ratio of 1:1 (solid content: 5.3 %). This mixed solvent solution was mixed with boehmite particles having an average particle diameter (D50) of 0.9 μm in a solid weight ratio of 5:45, which were dispersed with a beads mill to obtain aquous dispersion (solid content: 35.7 %). In addition, triethylene glycol monomethyl ether in the same amount as that of water included in an aqueous dispersion of polyethylene wax (an average particle diameter: 1 μm, a solid content: 40 %) was slowly added to the aqueous dispersion and stirred therewith to prepare a mixed solvent dispersion of polyethylene wax (solid content: 25.0 %). The above aquous dispersion was mixed with the mixed solvent dispersion of polyethylene wax in a weight ratio of 28:36 and then, stirred therewith with a planetary mixer to prepare a composition for forming a porous insulating layer (final solid content: 30 %).

This composition for forming a porous insulating layer was coated to be 3 μm thick on each surface of the negative active material layer of the negative electrode with a wire bar and then, dried. The drying was performed in a 60 °C oven for 15 minutes. Each thickness of the negative active material layer of the negative electrode having the porous insulating layer was measured and compared with each thickness of the negative active material layer before forming the porous insulating layer to calculate a thickness increment per each surface.

The thicknesses of the negative active material layer and the porous insulating layer were measured by processing a cross section of the electrode with a low temperature cross-sectional polisher and examining them with a scanning electron microscope (SEM) to average each thickness measurements at 10 points.

In addition, Table 1 shows a HSP distance between triethylene glycol monomethyl ether and a negative active material layer binder, a boiling point of the triethylene glycol monomethyl ether, and a thickness change of a negative active material layer (an active material layer). On the other hand, HSP of the triethylene glycol monomethyl ether was cited from Hansen Solubility Parameter in Practice 4th Edition. In addition, HSP of the negative active material layer binder was experimentally obtained in the above method by using a conventional solvent having a known HSP. These measurements were the same for the solvents and negative active material layer binders of other examples and comparative examples. HSP of a negative active material (graphite) used HSP of graphene described in Langmuir 2008;24;10560-4.

**(Example 2)**

A composition for forming a porous insulating layer was prepared according to the same method as in Example 1 except for changing Binder 1 into Binder 2 and using diethylene glycol monomethyl ether instead of the triethylene glycol monomethyl ether in Example 1 and then, coated on the negative electrode.

**(Example 3)**

Binder 3 was mixed with boehmite particles having an average particle diameter (D50) of 0.9 μm in a solid mass ratio of 5:95, and triethylene glycol monomethyl ether was added thereto to have a solid content of 30 %. Subsequently, the obtained mixture was dispersed with a beads mill to prepare a composition for forming a porous insulating layer (solvent: triethylene glycol monomethyl ether). Then, the composition was coated on the negative electrode according to the same

method as in Example 1.

**(Example 4)**

Binder 4 was mixed with boehmite particles having an average particle diameter (D50) of 0.9 μm in a solid mass ratio of 5:95, and diethylene glycol monomethyl ether was added thereto to have a solid content of 30 %. Subsequently, the obtained mixture was dispersed with a beads mill to prepare a composition for forming a porous insulating layer (solvent: diethylene glycol monomethyl ether). Then, the composition was coated on the negative electrode according to the same method as in Example 1.

**(Example 5)**

Binder 5 was mixed with boehmite particles having an average particle diameter (D50) of 0.9 μm in a solid mass ratio of 5:95, and diethylene glycol monomethyl ether was added thereto to have a solid content of 30 %. Subsequently, the obtained mixture was dispersed with a beads mill to prepare a composition for forming a porous insulating layer (solvent: diethylene glycol monomethyl ether). Then, the composition was coated on the negative electrode according to the same method as in Example 1.

**(Example 6)**

Binder 6 was mixed with boehmite particles having an average particle diameter (D50) of 0.9 μm in a solid mass ratio of 5:95, and 2-ethoxy ethanol (ethylene glycol monoethyl ether) was added thereto to have a solid content of 30 %. Subsequently, the obtained mixture was dispersed with a beads mill to prepare a composition for forming a porous insulating layer (solvent: 2-ethoxy ethanol). Then, the composition was coated on the negative electrode according to the same method as in Example 1.

**(Example 7)**

A vinyl butyral-vinyl alcohol-vinyl acetate copolymer having a weight average molecular weight of 70,000 to 100,000 (Sigma-Aldrich Co., Ltd.) as Binder 7 was mixed with boehmite particles having an average particle diameter (D50) of 0.9 μm in a solid mass ratio of 5:95, and 1-butanol was added thereto to have a solid content of 30 %. Subsequently, the mixture was dispersed with a beads mill to prepare a composition for forming a porous insulating layer (solvent: 1-butanol). The composition was coated on the negative electrode according to the same method as in Example 1.

**(Example 8)**

A composition for forming a porous insulating layer was prepared according to the same method as Example 7 except for using 3-methoxy-1-butanol instead of the 1-butanol and then, coated on the negative electrode according to the same method as in Example 1.

**(Example 9)**

A composition for forming a porous insulating layer was prepared according to the same method as Example 7 except for using 2-ethyl-1-hexanol instead of 1-butanol and then, coated on the negative electrode according to the same method as in Example 1.

**(Example 10)**

Binder 8 was mixed with boehmite particles having an average particle diameter (D50) of 0.9 μm in a solid mass ratio of 5:95, and 2-ethyl-1-hexanol was added thereto to have a solid content of 30 %. Subsequently, the obtained mixture was dispersed with a beads mill to prepare a composition for forming a porous insulating layer (solvent: 2-ethyl-1-hexanol). Then, the composition was coated on the negative electrode according to the same method as in Example 1.

**(Example 11)**

A composition for forming a porous insulating layer was prepared according to the same method as Example 7 except for using 1-hexanol instead of 1-butanol and then, coated on the negative electrode according to the same method

as in Example 1.

**(Example 12)**

A composition for forming a porous insulating layer was prepared according to the same method as Example 7 except for using 3-methoxy-3-methyl-1-butanol instead of the 1-butanol and then, coated on the negative electrode according to the same method as in Example 1.

**(Example 13)**

Binder 9 was mixed with boehmite particles having an average particle diameter (D50) of 0.9 μm in a solid mass ratio of 5:95, and 3-methoxy-3-methyl-1-butanol was added thereto to have a solid content of 30 %. Subsequently, the obtained mixture was dispersed with a beads mill to prepare a composition for forming a porous insulating layer (solvent: 3-methoxy-3-methyl-1-butanol). Then, the composition was coated on the negative electrode according to the same method as in Example 1.

**(Example 14)**

A composition for forming a porous insulating layer was prepared according to the same method as Example 7 except for using 1-heptanol instead of the 1-butanol and then, coated on the negative electrode according to the same method as in Example 1.

**(Example 15)**

Binder 9 was mixed with boehmite particles having an average particle diameter (D50) of 0.9 μm in a solid mass ratio of 5:45, 3-methoxy-3-methyl-1-butanol was added thereto to have a solid content of 45 %, and the mixture was dispersed with a beads mill to prepare boehmite dispersion. In addition, high-density oxidized polyethylene wax was added to 3-methoxy-3-methyl-1-butanol to have a solid content of 15 %, and the mixture was stirred with a homogenizer and dispersed with a beads mill to prepare a dispersion of polyolefin particles. The boehmite dispersion was mixed with the polyethylene wax dispersion in a solid mass ratio of 50:50 (Binder 9 : boehmite particle : high-density oxidized polyethylene wax = 5:45:50), and the mixture was stirred with a planetary mixer to prepare a composition for forming a porous insulating layer (solvent: 3-methoxy-3-methyl-1-butanol, a solid content of 22.5 %). Then, the composition was coated on the negative electrode according to the same method as in Example 1.

**(Example 16)**

Binder 8 was mixed with boehmite particles having an average particle diameter (D50) of 0.9 μm in a solid mass ratio of 5:45, 2-ethyl-1-hexanol was added thereto to have a solid content of 45 %, and the obtained mixture was dispersed to prepare a boehmite dispersion. In addition, high-density oxidized polyethylene wax was added to 2-ethyl-1-hexanol to have a solid content of 15 %, and the mixture was stirred with a homogenizer and dispersed with a beads mill to prepare a polyethylene wax dispersion.

The boehmite dispersion was mixed with the polyethylene wax dispersion in a solid mass ratio of 50:50 (Binder 9 : boehmite particle : high-density oxidized polyethylene wax = 5:45:50), and the mixture was stirred with a planetary mixer to prepare a composition for forming a porous insulating layer (solvent: 2-ethyl-1-hexanol, a solid content: 22.5 %). Subsequently, the composition was coated on the negative electrode according to the same method as in Example 1.

**(Comparative Example 1)**

A composition for forming a porous insulating layer having a solid content of 30 % (solvent: NMP) was prepared according to the same method as Example 3 except for using an acryl-based rubber N-methyl-2-pyrrolidone (NMP) solution instead of Binder 1. Subsequently, the composition was coated on the negative electrode according to the same method as in Example 1.

In Table 1, "SBR" denotes a styrene butadiene rubber, "CMC" denotes carboxymethyl cellulose, "NVf" denotes N-vinyl formamide, "ACMO" denotes acryloyl morpholine, "AA" denotes acrylic acid, "MAA" denotes methacrylic acid, "THFA" denotes tetrahydrofuranyl acrylate, "2EHA" denotes 2-ethylhexyl acrylate, "IBOA"denotes isobornyl acrylate, "VA" denotes vinyl alcohol, "VB" denotes vinyl butyrate), "VAc" denotes vinyl acetate, and "AN" denotes acrylo nitrile, respectively.

(Table 1)

| | Solvent 1 | | | | | Solvent 2 | Polyolefin-based polymer particle | Binder for porous insulating layer | | Thickness increase of active material layer (negative electrode layer) (μm) |
|---|---|---|---|---|---|---|---|---|---|---|
| | Kinds | Melting point (°C) | HSP distance with binder (SBR) $(MPa)^{1/2}$ | HSP distance with binder (CMC) $(MPa)^{1/2}$ | HSP distance with active material $(MPa)^{1/2}$ | Kinds | | Kinds | Composition | |
| Ex. 1 | triethylene glycol monomethyl ether | 249 | 8.8 | 13.0 | 6.2 | Water | Yes | Binder 1 | NVf/ACMO/A A =50/47.5/2.5 | 4.7 |
| Ex. 2 | diethylene gly-col mono-methyl ether | 194 | 8.9 | 12.8 | 6.3 | Water | Yes | Binder 2 | NVf/ACMO/A A =50/47.5/2.5 | 6.1 |
| Ex. 3 | triethylene glycol monomethyl ether | 249 | 8.8 | 13.0 | 6.2 | - | - | Binder 3 | NVf/ACMO/A A =40/55/5 | 3.4 |
| Ex. 4 | diethylene gly-col mono-methyl ether | 194 | 8.9 | 12.8 | 6.3 | - | - | Binder 4 | NVf/ACMO/T HFA/AA =50/24.5/23/ 2.5 | 4.3 |
| Ex. 5 | diethylene gly-col mono-methyl ether | 194 | 8.8 | 12.8 | 6.3 | - | - | Binder 5 | ACMO/AA =70/30 | 4.2 |
| | | | | | | | | | | |
| Ex. 6 | ethylene glycol monoethyl ether | 134 | 10.3 | 12.2 | 7.9 | - | - | Binder 6 | ACMO/AA =95/5 | 4.5 |
| Ex. 7 | 1-butanol | 118 | 11.7 | 11.5 | 9.7 | - | - | Binder 7 | VB/VA/AVc | 2.8 |
| Ex. 8 | 3-methoxy-1-butanol | 158 | 10.6 | 13.9 | 8.9 | - | - | Binder 7 | VB/VA/AVc | 3.1 |
| Ex. 9 | 2-ethyl-1-hexanol | 184 | 8.9 | 15.8 | 8.4 | - | - | Binder 7 | VB/VA/AVc | 3.0 |

(continued)

| | Solvent 1 | | | | | Solvent 2 | Polyolefin-based polymer particle | Binder for porous insulating layer | | Thickness increase of active material layer (negative electrode layer) (μm) |
|---|---|---|---|---|---|---|---|---|---|---|
| | Kinds | Melting point (°C) | HSP distance with binder (SBR) $(MPa)^{1/2}$ | HSP distance with binder (CMC) $(MPa)^{1/2}$ | HSP distance with active material $(MPa)^{1/2}$ | Kinds | | Kinds | Composition | |
| Ex. 10 | 2-ethyl-1-hexanol | 184 | 8.9 | 15.8 | 8.4 | - | - | Binder 8 | 2EHA/IBOA/AN/MAA =30/55/10/5 | 2.9 |
| Ex. 11 | 1-hexanol | 157 | 9.0 | 14.0 | 7.3 | - | - | Binder 7 | VB/VA/AVc | 4.3 |
| Ex. 12 | 3-methoxy-3-methyl-1-butanol | 174 | 9.2 | 13.3 | 7.2 | - | - | Binder 7 | VB/VA/AVc | 4.2 |
| Ex. 13 | 3-methoxy-3-methyl-1-butanol | 174 | 9.2 | 13.3 | 7.2 | - | - | Binder 9 | ACMO/AA =70/30 | 4.6 |
| Ex. 14 | 1-heptanol | 176 | 8.3 | 14.8 | 6.9 | - | - | Binder 7 | VB/VA/AVc | 4.6 |
| Ex. 15 | 3-methoxy-3-methyl-1-butanol | 174 | 9.2 | 13.3 | 7.2 | - | Yes | Binder 9 | ACMO/AA =70/30 | 4.8 |
| Ex. 16 | 2-ethyl-1-hexanol | 184 | 8.9 | 15.8 | 8.4 | - | Yes | Binder 8 | 2EHA/IBOA/AN/MAA =30/55/10/5 | 3.1 |
| Comp. Ex. 1 | N-methyl-2-pyrrolidone | 202 | 6.6 | 16.3 | 3.0 | - | - | Acrylic rubber | | 8.8 |

As shown in Table 1, when each composition for forming a porous insulating layer according to Examples 1 to 16 was used to form a porous insulating layer, an active material layer was suppressed from a thickness increase compared with the composition for forming the porous insulating layer according to Comparative Example 1. Particularly, each composition for forming a porous insulating layer including no water as a solvent according to Examples 3 to 16 shows a large effect of suppressing a thickness increase of an active material layer.

In addition, the compositions according to Examples 1 to 16 have a HSP distance of greater than or equal to 5.0 $(MPa)^{1/2}$ from an active material, but when each composition for forming a porous insulating layer having a HSP distance of 8.0 $(MPa)^{1/2}$ according to Examples 7 to 10 and 16 was formed into a porous insulating layer, a thickness increase of an active material layer was much suppressed.

**<Description of Symbols>**

10: non-aqueous electrolyte rechargeable battery
20: positive electrode
21: positive current collector
22: positive active material layer
30: negative electrode
31: negative current collector
32: negative active material layer
33: porous insulating layer
40: separator layer

**Claims**

1. An electrode (30) for a non-aqueous electrolyte rechargeable battery (10), the electrode comprising

a current collector (31),
an active material layer (32) disposed on a main surface of the current collector (31), and
a porous insulating layer (33) formed on the active material layer (32) by utilizing a composition for forming the porous insulating layer,

wherein the active material layer (32) comprises an active material capable of electrochemically intercalating and deintercalating lithium ions and an active material layer binder,
wherein the composition for forming the porous insulating layer (33) comprises a solvent including an organic solvent and an insulating inorganic particle, and
wherein a distance between Hansen solubility parameters of the active material layer binder and the organic solvent represented by Equation 2 is greater than or equal to 8.0 $(MPa)^{1/2}$:

[Equation 2]

$$\text{HSP distance} = \{4\times(\delta_{D(binder)}-\delta_{D(solvent)})^2+(\delta_{P(binder)}-\delta_{P(solvent)})^2+(\delta_{H(binder)}-\delta_{H(solvent)})^2\}^{1/2}$$

In Equation 2, $\delta_{D(binder)}$ denotes dispersion force of the active material layer binder, $\delta_{D(solvent)}$ denotes dispersion force of the organic solvent, $\delta_{P(binder)}$ denotes polarity force of the active material layer binder, $\delta_{P(solvent)}$ denotes polarity force of the organic solvent, $\delta_{H(binder)}$ denotes a hydrogen bond force of the active material layer binder, and $\delta_{H(solvent)}$ denotes a hydrogen bond force of the organic solvent, and
HSP distance is measured at a standard temperature 25 °C.

2. The electrode of claim 1, wherein a distance between Hansen solubility parameters of the active material and the organic solvent is greater than or equal to 5.0 $(MPa)^{1/2}$.

3. The electrode of claim 1, wherein a distance between the Hansen solubility parameters of the active material and the organic solvent is greater than or equal to 8.0 $(MPa)^{1/2}$.

4. The electrode of claim 1, wherein the organic solvent has a distance (Ra) of the Hansen solubility parameter represented by Equation 1 of greater than or equal to 5.0 $(MPa)^{1/2}$:

[Equation 1]

$$Ra = \{4\times(18.0-\delta_{D(solvent)})^2 + (9.3-\delta_{P(solvent)})^2 + (7.7-\delta_{H(solvent)})^2\}^{1/2}$$

wherein, in Equation 1, $\delta_{D\ (solvent)}$ denotes dispersion force of the organic solvent in $(MPa)^{1/2}$, $\delta_{P(solvent)}$ denotes polarity force of the organic solvent in $(MPa)^{1/2}$, and $\delta_{H(solvent)}$ denotes a hydrogen bond force of the organic solvent in $(MPa)^{1/2}$.

5. The electrode of claim 1, wherein the composition for forming the porous insulating layer (33) further comprises a porous insulating layer binder.

6. The electrode of claim 1, wherein the solvent comprises water.

7. The electrode of claim 1, wherein a boiling point of the organic solvent at 1 atm is greater than or equal to 160 °C.

8. The electrode of claim 1, wherein the organic solvent comprises an alcohol-based compound.

9. The electrode of claim 1, wherein the organic solvent comprises a glycolalkyl ether-based compound.

10. The electrode of claim 1, wherein the composition for forming the porous insulating layer (33) further comprises a polyolefin-based polymer particle.

11. A non-aqueous electrolyte rechargeable battery (10) comprising the electrode (30) for a non-aqueous electrolyte rechargeable battery of claim 1.

12. A method for manufacturing an electrode for a non-aqueous electrolyte rechargeable battery (10), the method comprising

forming a porous insulating layer (33) on an active material layer (32) disposed on a main surface of a current collector (31), by using a composition for forming a porous insulating layer,
wherein the active material layer (32) comprises at least an active material capable of electrochemically intercalating and deintercalating lithium ions and an active material layer binder,
the composition for forming the porous insulating layer comprises at least a solvent and an insulating inorganic particle, the solvent comprising an organic solvent, and
a distance between Hansen solubility parameters of the active material layer binder and the organic solvent represented by Equation 2 is greater than or equal to 8.0 $(MPa)^{1/2}$:

[Equation 2]

$$HSP\ distance = \{4\times(\delta_{D(binder)}-\delta_{D(solvent)})^2+(\delta_{P(binder)}-\delta_{P(solvent)})^2+(\delta_{H(binder)}-\delta_{H(solvent)})^2\}^{1/2}$$

In Equation 2, $\delta_{D(binder)}$ denotes dispersion force of the active material layer binder, $\delta_{D(solvent)}$ denotes dispersion force of the organic solvent, $\delta_{P(binder)}$ denotes polarity force of the active material layer binder, $\delta_{P(solvent)}$ denotes polarity force of the organic solvent, $\delta_{H(binder)}$ denotes a hydrogen bond force of the active material layer binder, and $\delta_{H(solvent)}$ denotes a hydrogen bond force of the organic solvent, and HSP distance is measured at a standard temperature 25°C.

## Patentansprüche

1. Elektrode (30) für eine wiederaufladbare Batterie (10) mit nicht wässrigem Elektrolyten, wobei die Elektrode Folgendes umfasst

einen Stromkollektor (31),
eine auf einer Hauptfläche des Stromkollektors (31) angeordnete Aktivmaterialschicht (32) und
eine poröse Isolierschicht (33), die auf der Aktivmaterialschicht (32) unter Verwendung einer Zusammensetzung zum Ausbilden der porösen Isolierschicht ausgebildet ist,

wobei die Aktivmaterialschicht (32) ein Aktivmaterial, das in der Lage ist, Lithiumionen elektrochemisch zu interkalieren und zu deinterkalieren, sowie ein Bindemittel für Aktivmaterialschicht umfasst,
wobei die Zusammensetzung zum Ausbilden der porösen Isolierschicht (33) ein Lösungsmittel, das ein organisches Lösungsmittel beinhaltet, und ein isolierendes anorganisches Partikel umfasst, und
wobei ein Abstand zwischen Hansen-Löslichkeitsparametern des Bindemittels für die Aktivmaterialschicht und des organischen Lösungsmittels, der durch Gleichung 2 dargestellt ist, größer oder gleich 8,0 $(MPa)^{1/2}$ ist:

$$\text{HSP-Abstand} = \{4\times(\delta_{D(Bindemittel)}-\delta_{D(Lösungsmittel)})^2+(\delta_{P(Bindemittel)}-\delta_{P(Lösungsmittel)})^2+(\delta_{H(Bindemittel)}-\delta_{H(Lösungsmittel)})^2\}^{1/2} \quad \text{[Gleichung 2]}$$

wobei in Gleichung 2 $\delta_{D(Bindemittel)}$ eine Dispersionskraft des Bindemittels für die Aktivmaterialschicht bezeichnet, $\delta_{D(Lösungsmittel)}$ eine Dispersionskraft des organischen Lösungsmittels bezeichnet, $\delta_{P(Bindemittel)}$ eine Polaritätskraft des Bindemittels für die Aktivmaterialschicht bezeichnet, $\delta_{P(Lösungsmittel)}$ eine Polaritätskraft des organischen Lösungsmittels bezeichnet, $\delta_{H(Bindemittel)}$ eine Wasserstoffbrückenbindungskraft des Bindemittels für die Aktivmaterialschicht bezeichnet und $\delta_{H(Lösungsmittel)}$ eine Wasserstoffbrückenbindungskraft des organischen Lösungsmittels bezeichnet, und
wobei der HSP-Abstand bei einer Standardtemperatur von 25 °C gemessen wird.

**2.** Elektrode nach Anspruch 1, wobei ein Abstand zwischen Hansen-Löslichkeitsparametern des Aktivmaterials und des organischen Lösungsmittels größer oder gleich 5,0 $(MPa)^{1/2}$ ist.

**3.** Elektrode nach Anspruch 1, wobei ein Abstand zwischen Hansen-Löslichkeitsparametern des Aktivmaterials und des organischen Lösungsmittels größer oder gleich 8,0 $(MPa)^{1/2}$ ist.

**4.** Elektrode nach Anspruch 1, wobei das organische Lösungsmittel einen Abstand (Ra) des Hansen-Löslichkeitsparameters, der durch Gleichung 1 dargestellt ist, größer oder gleich 5,0 $(MPa)^{1/2}$ aufweist:

[Gleichung 1]

$$Ra = \{4\times(18{,}0-\delta_{D(Lösungsmittel)})^2 + (9{,}3-\delta_{P(Lösungsmittel)})^2 + (7{,}7-\delta_{H(Lösungsmittel)})^2\}^{1/2}$$

wobei in Gleichung 1 $\delta_{D(Lösungsmittel)}$ eine Dispersionskraft des organischen Lösungsmittels in $(MPa)^{1/2}$ bezeichnet, $\delta_{P(Lösungsmittel)}$ eine Polaritätskraft des organischen Lösungsmittels in $(MPa)^{1/2}$ bezeichnet und $\delta_{H(Lösungsmittel)}$ eine Wasserstoffbrückenbindungskraft des organischen Lösungsmittels in $(MPa)^{1/2}$ bezeichnet.

**5.** Elektrode nach Anspruch 1, wobei die Zusammensetzung zum Ausbilden der porösen Isolierschicht (33) ferner ein Bindemittel für die poröse Isolierschicht umfasst.

**6.** Elektrode nach Anspruch 1, wobei das Lösungsmittel Wasser umfasst.

**7.** Elektrode nach Anspruch 1, wobei ein Siedepunkt des organischen Lösungsmittels bei 1 atm größer oder gleich 160 °C ist.

**8.** Elektrode nach Anspruch 1, wobei das organische Lösungsmittel eine Verbindung auf Alkoholbasis umfasst.

**9.** Elektrode nach Anspruch 1, wobei das organische Lösungsmittel eine Verbindung auf Glykolalkyletherbasis umfasst.

**10.** Elektrode nach Anspruch 1, wobei die Zusammensetzung zum Ausbilden der porösen Isolierschicht (33) ferner ein Polymerpartikel auf Polyolefinbasis umfasst.

**11.** Wiederaufladbare Batterie (10) mit nicht wässrigem Elektrolyten, umfassend die Elektrode (30) für eine wiederaufladbare Batterie mit nicht wässrigem Elektrolyten nach Anspruch 1.

**12.** Verfahren zum Herstellen einer Elektrode für eine wiederaufladbare Batterie (10) mit nicht wässrigem Elektrolyten, wobei das Verfahren Folgendes umfasst

Ausbilden einer porösen Isolierschicht (33) auf einer Aktivmaterialschicht (32), die auf einer Hauptfläche eines Stromkollektors (31) angeordnet ist, unter Verwendung einer Zusammensetzung zum Ausbilden einer porösen Isolierschicht,
wobei die Aktivmaterialschicht (32) mindestens ein Aktivmaterial, das in der Lage ist, Lithiumionen elektrochemisch zu interkalieren und zu deinterkalieren, und ein Bindemittel für die Aktivmaterialschicht umfasst,
wobei die Zusammensetzung zum Ausbilden der porösen Isolierschicht mindestens ein Lösungsmittel und ein isolierendes anorganisches Partikel umfasst, wobei das Lösungsmittel ein organisches Lösungsmittel umfasst, und
wobei ein Abstand zwischen Hansen-Löslichkeitsparametern des Bindemittels für die Aktivmaterialschicht und des organischen Lösungsmittels, der durch Gleichung 2 dargestellt ist, größer oder gleich 8,0 $(MPa)^{1/2}$ ist:

$$\text{HSP-Abstand} = \{4\times(\delta_{D(Bindemittel)}-\delta_{D(Lösungsmittel)})^2+(\delta_{P(Bindemittel)}-\delta_{P(Lösungsmittel)})^2+(\delta_{H(Bindemittel)}-\delta_{H(Lösungsmittel)})^2\}^{1/2} \quad \text{[Gleichung 2]}$$

wobei in Gleichung 2 $\delta_{D(Bindemittel)}$ eine Dispersionskraft des Bindemittels für die Aktivmaterialschicht bezeichnet, $\delta_{D(Lösungsmittel)}$ eine Dispersionskraft des organischen Lösungsmittels bezeichnet, $\delta_{P(Bindemittel)}$ eine Polaritätskraft des Bindemittels für die Aktivmaterialschicht bezeichnet, $\delta_{P(Lösungsmittel)}$ eine Polaritätskraft des organischen Lösungsmittels bezeichnet, $\delta_{H(Bindemittel)}$ eine Wasserstoffbrückenbindungskraft des Bindemittels für die Aktivmaterialschicht bezeichnet und $\delta_{H(Lösungsmittel)}$ eine Wasserstoffbrückenbindungskraft des organischen Lösungsmittels bezeichnet und der HSP-Abstand bei einer Standardtemperatur von 25 °C gemessen wird.

## Revendications

**1.** Électrode (30) pour une batterie rechargeable à électrolyte non aqueux (10), l'électrode comportant

un collecteur de courant (31),
une couche de matériau actif (32) disposée sur une surface principale du collecteur de courant (31), et
une couche isolante poreuse (33) formée sur la couche de matériau actif (32) en utilisant une composition pour la formation de la couche isolante poreuse,
dans laquelle la couche de matériau actif (32) comporte un matériau actif capable d'intercaler et de désintercaler électrochimiquement des ions lithium et un liant de couche de matériau actif,
dans laquelle la composition pour la formation de la couche isolante poreuse (33) comporte un solvant incluant un solvant organique et une particule inorganique isolante, et
dans laquelle une distance entre les paramètres de solubilité Hansen (HSP) du liant de couche de matériau actif et du solvant organique représentée par l'équation 2 est supérieure ou égale à 8,0 $(MPa)^{1/2}$ :

[Équation 2]

$$\text{Distance HSP} = \{4\times(\delta_{D(binder)}-\delta_{D(solvent)})^2+(\delta_{P(binder)}-\delta_{P(solvent)})^2+(\delta_{H(binder)}-\delta_{H(solvent)})^2\}^{1/2}$$

Dans l'équation 2, $\delta_{D(binder)}$ désigne la force de dispersion du liant de couche de matériau actif, $\delta_{D(solvent)}$ désigne la force de dispersion du solvant organique, $\delta_{P(binder)}$ désigne la force de polarité du liant de couche de matériau actif, $\delta_{P(solvent)}$ désigne la force de polarité du solvant organique, $\delta_{H(binder)}$ désigne une force de liaison hydrogène du liant de couche de matériau actif, et $\delta_{H(solvent)}$ désigne une force de liaison hydrogène du solvant organique, et la distance HSP est mesurée à une température standard de 25 °C.

**2.** Électrode selon la revendication 1, dans laquelle une distance entre les paramètres de solubilité Hansen du matériau actif et du solvant organique est supérieure ou égale à 5,0 $(MPa)^{1/2}$.

**3.** Électrode selon la revendication 1, dans laquelle une distance entre les paramètres de solubilité Hansen du matériau actif et du solvant organique est supérieure ou égale à 8,0 $(MPa)^{1/2}$.

4. Électrode selon la revendication 1, dans laquelle le solvant organique présente une distance (Ra) du paramètre de solubilité Hansen représentée par l'équation 1 supérieure ou égale à 5,0 $(MPa)^{1/2}$ :

[Équation 1]

$$Ra = \{4\times(18.0-\delta_{D(solvent)})^2 + (9.3-\delta_{P(solvent)})^2 + (7.7-\delta_{H(solvent)})^2\}^{1/2}$$

dans laquelle, dans l'équation 1, $\delta_{D(solvent)}$ désigne la force de dispersion du solvant organique en $(MPa)^{1/2}$, $\delta_{P(solvent)}$ désigne la force de polarité du solvant organique en $(MPa)^{1/2}$ et $\delta_{H(solvent)}$ désigne une force de liaison hydrogène du solvant organique en $(MPa)^{1/2}$.

5. Électrode selon la revendication 1, dans laquelle la composition pour la formation de la couche isolante poreuse (33) comporte en outre un liant de couche isolante poreuse.

6. Électrode selon la revendication 1, dans laquelle le solvant comporte de l'eau.

7. Électrode selon la revendication 1, dans laquelle un point d'ébullition du solvant organique à 1 atm est supérieur ou égal à 160 °C.

8. Électrode selon la revendication 1, dans laquelle le solvant organique comporte un composé à base d'alcool.

9. Électrode selon la revendication 1, dans laquelle le solvant organique comporte un composé à base de glycolalkyléther.

10. Électrode selon la revendication 1, dans laquelle la composition pour la formation de la couche isolante poreuse (33) comporte en outre une particule polymère à base de polyoléfine.

11. Batterie rechargeable à électrolyte non aqueux (10) comportant l'électrode (30) pour une batterie rechargeable à électrolyte non aqueux selon la revendication 1.

12. Procédé de fabrication d'une électrode pour une batterie rechargeable à électrolyte non aqueux (10), le procédé comportant

la formation d'une couche isolante poreuse (33) sur une couche de matériau actif (32) disposée sur une surface principale d'un collecteur de courant (31), en utilisant une composition pour la formation d'une couche isolante poreuse,
dans lequel la couche de matériau actif (32) comporte au moins un matériau actif capable d'intercaler et de désintercaler électrochimiquement des ions lithium et un liant de couche de matériau actif,
la composition pour la formation de la couche isolante poreuse comporte au moins un solvant et une particule inorganique isolante, le solvant comportant un solvant organique, et
une distance entre les paramètres de solubilité Hansen (HSP) du liant de couche de matériau actif et du solvant organique représenté par l'équation 2 est supérieure ou égale à 8,0 $(MPa)^{1/2}$ :

[Équation 2]

$$\text{Distance HSP} = \{4\times(\delta_{D(binder)}-\delta_{D(solvent)})^2 + (\delta_{P(binder)}-\delta_{P(solvent)})^2 + (\delta_{H(binder)}-\delta_{H(solvent)})^2\}^{1/2}$$

Dans l'équation 2, $\delta_{D(binder)}$ désigne la force de dispersion du liant de couche de matériau actif, $\delta_{D(solvent)}$ désigne la force de dispersion du solvant organique, $\delta_{P(binder)}$ désigne la force de polarité du liant de couche de matériau actif, $\delta_{P(solvent)}$ désigne la force de polarité du solvant organique, $\delta_{H(binder)}$ désigne une force de liaison hydrogène du liant de couche de matériau actif et $\delta_{H(solvent)}$ désigne une force de liaison hydrogène du solvant organique, et la distance HSP est mesurée à une température standard de 25 °C.

FIG. 1

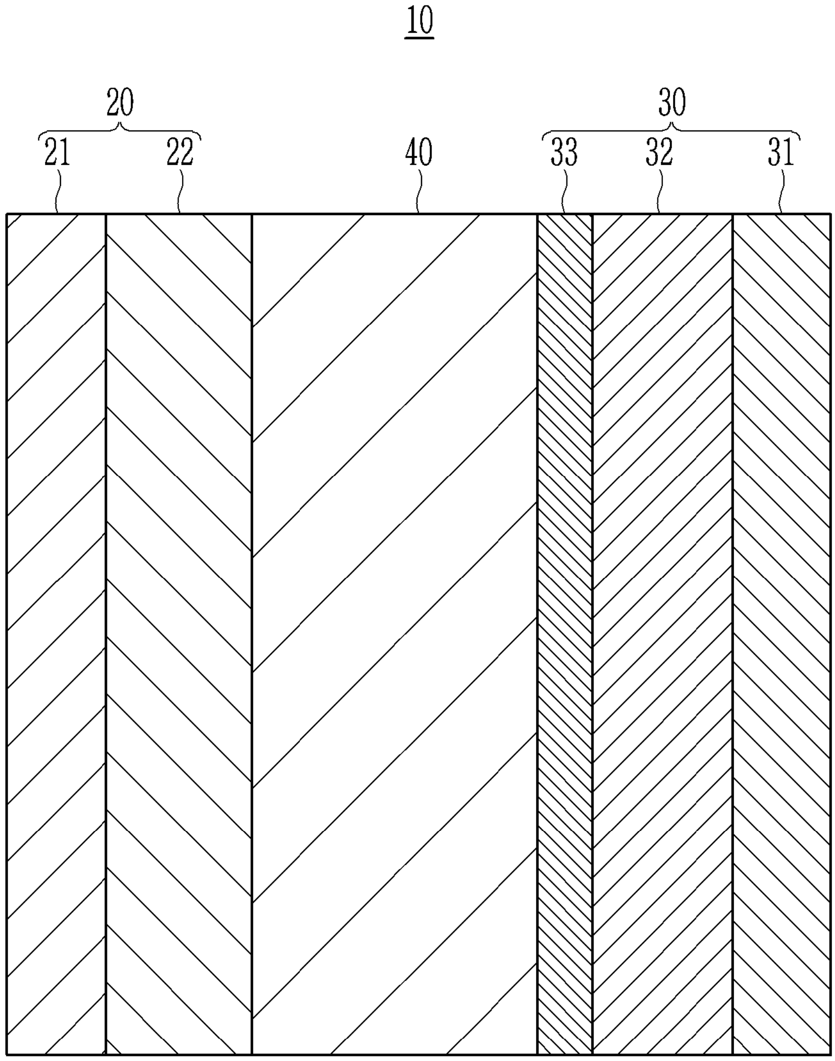

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008226566 A
- US 2014186682 A1
- CN 106898721 A
- US 2017033344 A1


### Non-patent literature cited in the description


- *Langmuir*, 2008, vol. 24, 10560-4